# EUROPÄISCHE PATENTANMELDUNG

(11) **EP 2 165 974 A1**
(43) Veröffentlichungstag der Anmeldung: **24.03.2010**
(21) Anmeldenummer: 08164485.8
(22) Anmeldetag: 17.09.2008
(51) Int. Cl.: C01G 23/047, C09C 1/36

(54) **Verfahren zur Bleiche von hydrolytisch gefälltem Titanoxidhydrat**

(71) Anmelder: L. Brüggemann Kommanditgesellschaft, 74076 Heilbronn (DE)
(72) Erfinder: Berghofer, Josef, 97941 Tauberbischofsheim (DE); Wandner, Derk, 71634 Ludwigsburg (DE)
(74) Vertreter: Reitstötter - Kinzebach

(57) **Zusammenfassung**

Hydrolytisch gefälltes Titanoxidhydrat, das nach dem Sulfatverfahren erhalten ist, wird durch Behandlung mit Formamidinsulfinsäure gebleicht. Die Behandlung liefert geringere Restgehalte an farbgebenden Metallen als bekannte Reduktionsmittel wie Aluminium-, Zinkpulver oder Natriumthiosulfat. Es fallen keine gasförmigen und/oder übelriechenden Reaktionsprodukte an. Das Titanoxidhydrat wird zu Titandioxid calciniert.

## Beschreibung

Titandioxid ist ein wichtiges Weißpigment, das vielfältige Anwendung findet, z. B. in Wandfarben, Druckfarben, zum Einfärben von Kunststoffen und in der Textilindustrie. Aufgrund der Ungiftigkeit wird das Pigment außerdem in kosmetischen und pharmazeutischen Zubereitungen verwendet, wie Lippenstiften, Cremes, Schminken und Pudern. Titandioxid wird fast ausschließlich nach zwei Verfahren, dem Sulfatverfahren und dem Chloridverfahren, hergestellt (Ullmanns Encyklopädie der technischen Chemie, 4. Auflage, Band 18, Seite 569 ff.).

Beim Sulfatverfahren wird ein Titanerz und/oder Titanschlacke, die aus Titanerzen durch Reduktion mit Kohlenstoff erhalten ist, mit Schwefelsäure aufgeschlossen. Der hierbei entstehende feste Aufschlusskuchen wird anschließend mehrere Stunden bei Temperaturen zwischen 100 °C und 200 °C gereift und dann mit Wasser oder verdünnter Schwefelsäure gelöst. Die erhaltene Aufschlusslösung kann je nach eingesetztem Rohstoff verschiedene Salze in gelöster Form enthalten. Beim Einsatz von Ilmeniten oder anderen Titanerzen enthält die Aufschlusslösung im Wesentlichen Titanylsulfat und Eisen(III)sulfat in gelöster Form. Beim Einsatz von Titanschlacken enthält die Aufschlusslösung Titanylsulfat, Titan(III)sulfat und Eisen(II)sulfat. Des Weiteren enthalten beide Aufschlusslösungen verschiedene andere Metallsulfate aus den zum Aufschluss eingesetzten Rohstoffen (Erz, Säure u.a.), wie zum Beispiel Aluminiumsulfat, Magnesiumsulfat, Chrom(III)sulfat usw. in gelöster Form und feste, nicht aufgeschlossene Gangart.

Bevor das Titanylsulfat als Titanoxidhydrat gefällt und calciniert werden kann, muss das in der Aufschlusslösung enthaltene Fe³⁺ in Fe²⁺ überführt werden, da Fe³⁺ in der Hydrolyse mitgefällt und die optischen Eigenschaften des Pigmentes verschlechtern würde. Diese Reduktion wird im Allgemeinen mit metallischem Eisen, z. B. Eisenschrott, beim Lösen des Aufschlusskuchens im Aufschlussbehälter bzw. nach dem Lösen in Reduktionstürmen durchgeführt.

Alle nicht aufgeschlossenen Feststoffe werden anschließend möglichst vollständig von der Lösung abgetrennt. Die feststofffreie Lösung wird als Schwarzlösung bezeichnet. Beim Ilmenit-Aufschluss wird anschließend, z. B. durch Vakuumkühlung, Eisensulfatheptahydrat (FesO₄ * 7 H₂O) auskristallisiert. Das Salz kann durch Zentrifugieren oder Filtration abgetrennt werden.

Durch Kochen mit Wasser wird das Titanylsulfat dann zu Titanoxidhydrat hydrolysiert, das aus der Lösung ausfällt. Das Titanoxidhydrat (Weißschlamm) wird von der säurehaltigen Mutterlauge (Dünnsäure) abgetrennt und mit Wasser oder schwacher Säure gewaschen.

Auch nach der Wäsche verbleiben in dem Titanoxidhydrat noch störende Schwermetall-Verunreinigungen, insbesondere durch Fe, Cr, Mn und V, die stark farbige Oxide bilden und die optischen Eigenschaften des Weißpigmentes beeinträchtigen können. Es ist daher üblich, das Titanoxidhydrat durch die Zugabe von Reduktionsmitteln zu behandeln (Bleiche). Dabei werden die Schwermetall-Verbindungen zu leichter löslichen niedervalenten Verbindungen reduziert, die aus dem Titanoxidhydrat ausgewaschen werden können.

So beschreibt die US 1,885,187 ein Verfahren zur Herstellung eines Weißpigmentes, bei dem hydrolytisch gefälltes Titandioxid mit verdünnter Salzsäure in Gegenwart eines Reduktionsmittels behandelt wird. Als Reduktionsmittel werden Schwefelwasserstoff, Thiosulfate und Sulfide genannt. Weiterhin soll naszierender Wasserstoff, erzeugt durch Zugabe von Schrottmetall oder durch Elektrolyse, geeignet sein.

Die US 2,999,011 schlägt vor, von der Titanoxidhydrat-Aufschlämmung eine Teilmenge abzutrennen und das Titan in der Teilmenge durch Zugabe von Säure und eines Reduktionsmittels in den dreiwertigen Zustand zu überführen. Die das dreiwertige Titan enthaltende Teilmenge wird dann zur Bleiche der Hauptmenge der Titanoxidhydrat-Aufschlämmung verwendet. Als Reduktionsmittel sind Aluminium- oder Zinkmetall geeignet.

Die EP-A 343 418 beschreibt die Bleiche des Titanoxidhydrates durch reduzierende Behandlung in Gegenwart von Schwefelsäure. Dabei soll die bei der Entschwefelung der Abgase anfallende 5 bis 20 %ige Schwefelsäure ohne vorherige Konzentration zusammen mit technisch reiner ca. 96 %iger Schwefelsäure eingesetzt werden. Die eigentliche Bleiche unter Einsatz von Reduktionsmitteln erfolgt dann auf bekannte Weise mit Aluminium- oder Zink-Pulver oder mit Natriumformaldehydsulfoxylat.

Die Verwendung von Pulvern unedler Metalle, wie Aluminium- oder Zink-Pulver, weist den Nachteil auf, dass sich in dem sauren Behandlungsmedium in einer stürmischen Nebenreaktion große Mengen Wasserstoffgas bilden. Die Entzündlichkeit bzw. Explosionsgefahr des Wasserstoffgases erfordern hohe sicherheitstechnische Vorkehrungen. Außerdem stehen die Reduktionsäquivalente des entweichenden Wasserstoffgases nicht zur Reduktion farbgebender Oxide zur Verfügung, so dass man stets einen erheblichen Überschuss an Reduktionsmittel einsetzen muss. Ebenfalls ist die Verwendung von Aluminium in Form von Aluminiumpasten bekannt, die eine kontinuierliche Freisetzung von Wasserstoff zeigen. Als Dispersionsmedium wurden anfänglich Kohlenwasserstoffe (Testbenzin) verwendet. Da diese aber zu einer unerwünschten Belastung der Abwässer mit organischen Verbindungen führen, wurden Aluminiumpasten auf Wasserbasis entwickelt. Zur Stabilisierung sind die Aluminiumteilchen in diesen Pasten passiviert. Um die Passivierung zu überwinden, müssen sie bei erhöhter Temperatur und unter Zugabe von Säure verwendet werden. Aufgrund gestiegener Rohstoffpreise sowie steigender Energiekosten unterliegt die Verwendung von Zink- bzw. Aluminium zunehmend wirtschaftlichen Nachteilen.

Der Erfindung liegt die Aufgabe zugrunde, ein alternatives Reduktionsmittel anzugeben, das sich zur Bleiche von hydrolytisch gefälltem Titanoxidhydrat eignet. Das Reduktionsmittel sollte ein geeignetes Redoxpotential aufweisen, um die Schwermetallverbindungen, die das hydrolytisch gefällte Titanoxidhydrat kontaminieren, zu löslichen niedervalenten Verbindungen zu reduzieren. Das Reduktionsmittel sollte in wässriger Lösung jedoch keinen freien Wasserstoff bilden. Bei der Redoxreaktion sollten keine gasförmigen und/oder übelriechenden Reaktionsprodukte anfallen; die Reaktionsprodukte sollten ungiftig sein und zu keiner Beeinträchtigung des letztlich hergestellten Titandioxids führen. Weiterhin sollen Handhabbarkeit und Dosierung des Reduktionsmittels einfach sein.

Die Erfindung betrifft ein Verfahren zur Bleiche von hydrolytisch gefälltem Titanoxidhydrat durch Behandlung mit Formamidinsulfinsäure.

Formamidinsulfinsäure (FAS) oder Aminoiminomethansulfonsäure entspricht der chemischen Formel

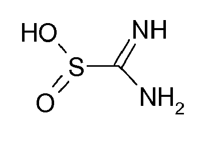

Sie ist ein weißes bis leicht gelbliches, kristallines Pulver. Die Löslichkeit in Wasser beträgt etwa 27 g pro I bei 20°C. Formamidinsulfinsäure findet Anwendung als Reduktivbleichmittel in der Papierindustrie und Textilindustrie. Die Reaktionsprodukte der Umsetzung von Formamidinsulfinsäure mit Oxidationsmitteln sind Harnstoff und Sulfat.

Die Bleiche mit FAS lässt sich ohne Weiteres in bestehenden Prozessen und/oder Anlagen zur Titandioxid-Herstellung, insbesondere nach dem Sulfatverfahren, implementieren. Da keine gasförmigen Neben- oder Reaktionsprodukte entstehen, sind keine besonderen sicherheitstechnischen Anforderungen an die Produktionsanlagen zu stellen. Im Vergleich zu Aluminiumpulver oder -pasten entfaltet FAS ausreichende Reduktionswirkung bereits bei niedrigeren Temperaturen und geringeren Zugabemengen. FAS zeigt eine kontinuierliche Wirkungsweise, so dass eine gewünschte FAS-Menge auf einmal zugegeben werden kann und Nachdosieren nicht erforderlich ist. Mit diesen Eigenschaften gestattet FAS erhebliche Einsparungen von Rohstoffen, Energie- und Arbeitskosten.

Im Allgemeinen versetzt man eine wässrige Aufschlämmung des hydrolytisch gefällten Titanoxidhydrats mit FAS, z. B. durch Zugabe fester, pulverförmiger FAS zur Aufschlämmung. Nach einer Einwirkzeit, vorzugsweise unter Bewegung, wird das Titanoxidhydrat von der Lösung abgetrennt, z. B. durch Filtration, und gewaschen, z. B. mit Wasser oder verdünnter Säure.

Die wässrige Lösung kann, wie bei bekannten Verfahren, sauer eingestellt sein, z. B. durch Zugabe von Salzsäure und/oder Schwefelsäure. Die erfindungsgemäße Bleiche kann aber auch bei neutralen oder basischen pH-Werten erfolgen, so dass auf eine Säurezugabe bei der Bleiche verzichtet werden kann.

Die Behandlung mit FAS wird in der Regel bei einer Temperatur von 30 bis 90 °C durchführt, vorzugsweise 40 bis 80 °C.

Verfahren nach einem der vorhergehenden Ansprüche, wobei man 0,1 bis 10 g, vorzugsweise 0,4 bis 4 g, Formamidinsulfinsäure auf 1 t Titanoxidhydrat, gerechnet als TiO₂, einsetzt.

Die Einwirkzeit hängt von verschiedenen Faktoren ab, wie dem gewünschten Behandlungserfolg, der eingesetzten FAS-Menge, der Temperatur und dem pH-Wert. In der Regel beträgt die Einwirkzeit 0,1 bis 2 Stunden, vorzugsweise 0,2 bis 1 Stunde(n).

Das hydrolytisch gefällte Titanoxidhydrat, das erfindungsgemäß behandelt wird, ist im Allgemeinen nach dem Sulfatverfahren erhalten. Dieses umfasst in der Regel den Aufschluss von titanhaltigen Rohstoffen mit Schwefelsäure unter Bildung eines Aufschlusskuchens, Auflösen des Aufschlusskuchens mit Wasser und/oder Schwefelsäure unter Bildung einer Aufschlusslösung (so genannte Schwarzlösung), Abtrennen unlöslicher Bestandteile von der Aufschlusslösung, gegebenenfalls Reduktion von Fe³⁺ in der Aufschlusslösung, Hydrolyse unter Bildung von Titanoxidhydrat und Abtrennen des Titanoxidhydrates von der Hydrolysemutterlauge.

Das erfindungsgemäß behandelte Titanoxidhydrat kann dann in üblicher Weise unter Bildung von Titandioxid calciniert werden, z. B. in einem Drehrohrofen.

Die Erfindung wird durch die folgenden Beispiele näher veranschaulicht:

Die Beispiele wurden mit einem Weißschlamm (Titanoxidhydrat-Aufschlämmung) durchgeführt, der 190 ppm Eisen, 5,4 ppm Chrom und 8 ppm Vanadium, jeweils bezogen auf den TiO₂-Gehait, enthielt.

### BEISPIEL 1:

560 g Weißschlamm, entsprechend 150 g TiO₂, wurden mit 64 g Wasser, 23 g Schwefelsäure (96 %) und 5,5 g Salzsäure (32 %) versetzt. Diese Mischung wurde unter Rühren auf eine Reaktionstemperatur von 80 °C erhitzt und anschließend 150 mg Formamidinsulfinsäure zugegeben. Die Reaktionsmischung wurde eine Stunde bei dieser Temperatur gerührt, heiß über einen Filter abfiltriert und abschließend mit etwa 2,5 Liter heißem Wasser gewaschen. Das so erhaltene gebleichte Produkt wurde in einem Trockenschrank/IR-Trockner getrocknet.

Zur Analyse wurden 10 g des erhaltenen Produktes unter Kochen in 40 ml Königswasser gelöst und auf 50 ml mit Wasser aufgefüllt. In den erhaltenen Lösungen wurden mit dem AAS-Gerät AAnalyst 400 der Firma Perkin Elmer die Restgehalte an Eisen und Chrom bestimmt. Zur Bestimmung des Vanadium-Gehaltes wurden die Lösungen auf ein Drittel eingedampft und auch mit demselben Gerät untersucht. Die erhaltenen Werte sind in Tabelle 1 aufgeführt.

Außerdem wurden etwa 50 g des gebleichten Produkts fein vermahlen und mit dem Kugelspektralfotometer SP62 der Firma X-Rite die Lab-Werte gegen einen geräteinternen Standard bestimmt. Die erhaltenen Werte sind in Tabelle 2 aufgeführt.

### BEISPIEL 2:

Beispiel 2 wurde bei 60 °C analog zu Beispiel 1 durchgeführt.

### BEISPIEL 3:

Beispiel 3 wurde bei 40 °C analog zu Beispiel 1 durchgeführt.

### BEISPIEL 4:

Beispiel 4 wurde mit reduzierter Dosiermenge des Reduktionsmittels von 75 mg analog zu Beispiel 1 durchgeführt.

### BEISPIEL 5:

Beispiel 5 wurde mit reduzierter Dosiermenge des Reduktionsmittels von 40 mg analog zu Beispiel 1 durchgeführt.

### BEISPIEL 6:

Beispiel 6 wurde mit 560 g Weißschlamm, 30 g Wasser und 150 mg Formamidinsulfinsäure analog zu Beispiel 1 durchgeführt.

### VERGLEICHSBEISPIEL 1:

560 g Weißschlamm, entsprechend 150 g TiO₂, wurden mit 63 g Salzsäure (32 %) und 30 g Wasser versetzt. Diese Mischung wurde unter Rühren auf eine Reaktionstemperatur von 80 °C erhitzt und anschließend 150 mg Aluminiumpulver (Firma Merck, Reinheit > 99 %) zugegeben. Die Reaktionsmischung wurde über eine Stunde bei dieser Temperatur gerührt, heiß über einen Filter abfiltriert und abschließend mit etwa 2,5 Liter heißem Wasser gewaschen. Das so erhaltene gebleichte Produkt wurde in einem Trockenschrank/IR-Trockner getrocknet.

Die Analyse des Produktes erfolgte wie im Beispiel 1; die erhaltenen Werte sind in Tabelle 1 aufgeführt, die Lab-Werte sind in Tabelle 2 angegeben.

### VERGLEICHSBEISPIEL 2:

Das Beispiel wurde analog zum Vergleichsbeispiel1 mit Zinkpulver (Firma Merck, Reinheit > 99,9 %) durchgeführt.

### VERGLEICHSBEISPIEL 3:

Das Beispiel wurde analog zum Vergleichsbeispiel1 mit Ausnahme der Zugabe von Salzsäure durchgeführt.

### VERGLEICHSBEISPIEL 4:

Das Beispiel wurde mit 150 mg Natriumthiosulfat-Pentahydrat (Firma Merck, Reinheit > 99,5%) analog zu Beispiel 1 durchgeführt.

### VERGLEICHSBEISPIEL 5:

Das Beispiel wurde mit 636 mg Formaldehydbisulfit (Firma Brüggemann, Reinheit > 96%) analog zu Beispiel 1 durchgeführt.

**TABELLE 1: Metallgehalt nach der Bleiche.**

| Beispiel | Bleichmittel (Menge) | Temperatur (°C) | Fe (ppm) | Cr (ppm) | V (ppm) |
|---|---|---|---|---|---|
| Beispiel 1 | FAS (150 mg) | 80 | 0,5 | 0,3 | <4 |
| Beispiel 2 | FAS (150 mg) | 60 | 1,2 | 0,4 | <4 |
| Beispiel 3 | FAS (150 mg) | 40 | 1,2 | 0,6 | <4 |
| Beispiel 4 | FAS (75 mg) | 80 | 2,5 | 0,3 | <4 |
| Beispiel 5 | FAS (40 mg) | 80 | 3,5 | 0,4 | <4 |
| Beispiel 6 | FAS (150 mg) ohne Säurezusatz | 80 | 2,1 | 0,9 | <4 |
| Vergleichsbeispiel 1 | AI (150 mg) | 80 | 7,1 | 0,6 | <4 |
| Vergleichsbeispiel 2 | Zn (150 mg) | 80 | 7,4 | 0,5 | <4 |
| Vergleichsbeispiel 3 | AI (150 mg) ohne Säurezusatz* | 80 | | | |
| Vergleichsbeispiel 4 | Na₂S₂O₃*5H₂O (150mg) | 80 | 14 | 1,2 | 6 |
| Vergleichsbeispiel 5 | Formaldehydbisulfit (636 mg) | 80 | 27 | 4,5 | 7 |

| | | | | | |
|---|---|---|---|---|---|
| * Das eingesetzte Aluminiumpulver reagierte nicht vollständig unter diesen Reaktionsbedingungen. | | | | | |

**TABELLE 2: Lab-Messung nach der Bleiche.**

| Beispiel | Temperatur (°C) | L | a | b |
|---|---|---|---|---|
| Beispiel 1 | 80 | 97,13 | -0,09 | 1,28 |
| Vergleichsbeispiel 1 | 80 | 97,01 | -0,32 | 2,10 |
| Vergleichsbeispiel 2 | 80 | 96,86 | -0,11 | 1,43 |
| Vergleichsbeispiel 4 | 80 | 96,04 | -0,25 | 2,38 |
| Vergleichsbeispiel 5 | 80 | 95,63 | -0,30 | 2,90 |

Man erkennt, dass FAS gegenüber Aluminium-, Zinkpulver, Natriumthiosulfat und Formaldehydbisulfit als Reduktionsmittel geringere Restgehalte an farbgebenden Metallen (Tabelle 1) und höhere Weißgrade liefert (Tabelle 2). Man erkennt weiter, dass im Vergleich zu Aluminiumpulver ohne Verschlechterung der Metallgehalte nach der Bleiche die Temperatur und Einsatzmenge reduziert werden können (Beispiele 2 bis 5) bzw. auf einen Säurezusatz verzichtet werden kann (Beispiel 6).

## Patentansprüche

1. Verfahren zur Bleiche von hydrolytisch gefälltem Titanoxidhydrat durch Behandlung mit Formamidinsulfinsäure.

2. Verfahren nach Anspruch 1, wobei man eine wässrige Aufschlämmung des hydrolytisch gefällten Titanoxidhydrats mit Formamidinsulfinsäure versetzt und das Titanoxidhydrat nach einer Einwirkzeit abtrennt.

3. Verfahren nach Anspruch 2, wobei die Aufschlämmung sauer eingestellt ist.

4. Verfahren nach Anspruch 2, wobei man keine Säure zu der Aufschlämmung gibt.

5. Verfahren nach einem der vorhergehenden Ansprüche, wobei man die Behandlung bei einer Temperatur von 30 bis 90 °C durchführt.

6. Verfahren nach einem der vorhergehenden Ansprüche, wobei man 0,1 bis 10 g Formamidinsulfinsäure auf 1 t Titanoxidhydrat, gerechnet als TiO₂, einsetzt.

7. Verfahren nach einem der vorhergehenden Ansprüche, wobei das behandelte Titanoxidhydrat anschließend zu Titandioxid calciniert wird.

8. Verwendung von Formamidinsulfinsäure zur Bleiche von hydrolytisch gefälltem Titanoxidhydrat.
